# EUROPEAN PATENT SPECIFICATION

(11) **EP 4 349 519 B1**
(45) Date of publication and mention of the grant of the patent: **07.05.2025**
(21) Application number: 23199972.3
(22) Date of filing: 27.09.2023
(51) Int. Cl.: B23K 13/02, B23K 37/00, B23K 101/06

(54) **NITROGEN COOLING SYSTEM APPARATUS FOR IMPEDER HIGH-FREQUENCY WELDING PROCESS**
STICKSTOFFKÜHLSYSTEMVORRICHTUNG FÜR HOCHFREQUENZSCHWEISSVERFAHREN MIT IMPEDANZMESSER
APPAREIL DE SYSTÈME DE REFROIDISSEMENT À L'AZOTE POUR PROCÉDÉ DE SOUDAGE HAUTE FRÉQUENCE À IMPÉDANCE RÉDUITE

(30) Priority: 03.10.2022 IT 202200020265
(43) Date of publication of application: 10.04.2024
(73) Proprietor: Societa' Italiana Acetilene & Derivati S.I.A.D. S.p.A. in breve S.I.A.D. S.p.A., 24126 Bergamo (IT)
(72) Inventor: MALOMO, Alfredo, 24126 BERGAMO (IT); RECANATI, Anselmo, 24126 BERGAMO (IT); SILVETTI, Gualtiero, 24126 MILANO (IT)
(74) Representative: Bianchetti & Minoja with Trevisan & Cuonzo IPS SRL

(56) References cited:
- EP-B1- 2 886 238
- JP-A- 2014 188 569
- JP-A- 2020 182 971
- JP-A- S 597 488

## Description

### FIELD OF THE INVENTION

The present invention relates to an innovative impeder apparatus for high-frequency welding, in particular for welding pipes or the like, see, e.g. JPS597488A, which forms the basis for the preamble of claim 1.

More particularly, the impeder apparatus for welding according to the present invention comprises a system of nitrogen cooling of the impeder which makes it possible to guarantee a constant required temperature at the impeder itself, achieving greater system simplicity and, at the same time, improved quality of the weld that can be obtained.

The process implemented by said apparatus is also the subject of the present invention.

### STATE OF THE ART

Using impeders for high-frequency welding of metal pipes is known from the state of the art.

An example of such apparatus is provided for example in international patent application WO 2006/068967 A2, which describes in particular impeders that can be used in electrical induction welding processes to form metal pipes or tubes.

With induction welding, the heat is electromagnetically induced into the workpiece. It is a high-precision, high-speed process, which makes this process ideal for welding the edges of pipes and tubes.

During this welding process, the pipes pass at high speed through an induction spool (also known as a Ruhmkorff spool), which electromagnetically induces the heat required to make the weld at the pipe to be welded.

The function of the impeder is to concentrate the magnetic flux that is generated by the inductor in the area of welding of the pipe. By lowering the reluctance of the magnetic path, the impeder, placed inside the pipe, enables energy to be saved and the efficiency of the entire welding process to be improved.

The impeder is therefore placed inside the pipe to be welded and concentrates the magnetic flux generated by the spool inductor, greatly improving the efficiency of the process itself.

Automated longitudinal induction welding that uses impeders is therefore a process characterised by high yield, low energy consumption and high efficiency, which enables costs to be reduced drastically. Furthermore, ease of control and reproducibility reduce scrap.

A disadvantage that affects apparatuses and methods for induction welding by impeder of the known type is however constituted by the risk of breakage of the impeder caused by the increase in temperature of the same.

In order to avoid breakage of the impeder, it is therefore necessary to cool the impeder itself to a temperature value that allows the properties of the magnetic field to be preserved.

The impeder is in fact made of ferrite, and therefore proper cooling of the impeder is essential also to ensure maximum welding efficiency and to keep the parameters of the production process stable, the Curie temperature of the ferrite being comprised between 125 and 350°C.

To date, the impeder is generally cooled by water, disposable or recirculated within a circuit, and there are impeders specifically designed to optimise the cooling of the ferrite core by water.

In order to optimise the cooling of the impeder by means of water, the impeder is generally made with particular geometries, which also affect the structure of the user machine.

Furthermore, as mentioned, the use of water as a cooling medium entails the need to make a system for the recirculation and collection of the coolant and its disposal.

The need is therefore felt in the industry to use an impeder apparatus for high-frequency welding of pipes or the like that enables the disadvantages indicated above, in particular with reference to the simplification of the structure and features of the apparatus and of the impeder itself, to be overcome.

### SUMMARY OF THE INVENTION

In light of the above, a task of the present invention is to provide an impeder apparatus for high-frequency welding of pipes or the like which enables the above-mentioned disadvantages to be overcome.

Within this task, an object of the present invention is to provide an impeder apparatus for high-frequency welding that ensures a certain constant temperature of the impeder and the possibility of setting the temperature value of the impeder and allows real-time monitoring of the value of this temperature.

Not least, the object of the present invention is to provide an impeder apparatus for high-frequency welding that allows the need to make impeders with particular geometries to be avoided and, consequently, does not require ad hoc modifications to the user machines, i.e. to the welding apparatus.

This task and these and other objects are achieved by an impeder apparatus for high-frequency welding according to claim 1 and by a high-frequency welding process according to claim 8.

Further features of the apparatus according to the present invention are the subject of the dependent claims.

### LIST OF THE DRAWING

Further features and advantages will be made clearer by the following illustrative but non-limiting description of a preferred embodiment of the present invention which will be given here below with the aid of the accompanying drawing in which:

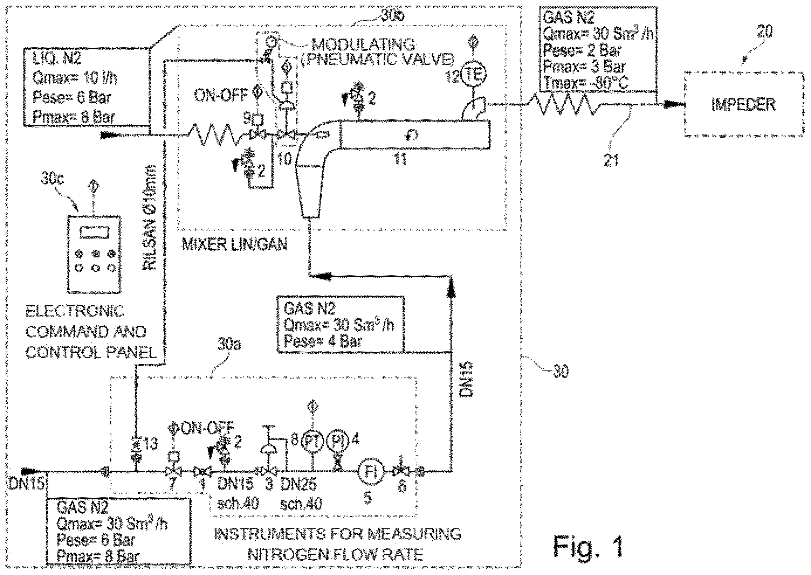

Figure 1 shows a diagram of the apparatus according to the present invention in which the elements of the cooling system of said apparatus are shown in particular, among which the mixing chamber, the two circuits for feeding liquid and gaseous nitrogen respectively to said mixing chamber, and the elements that characterise and determine the functionality of this system can be noted.

### DETAILED DESCRIPTION OF THE INVENTION

With particular reference to the accompanying drawing, the impeder apparatus for high-frequency welding according to the present invention comprises at least one cooling system 30 for cooling at least one impeder **20.**

Said cooling system **30** of the apparatus according to the present invention comprises in turn at least one mixing chamber **11** fed by two separate circuits **30a, 30b,** and at least one control and command panel **30c.**

The first circuit **30a** for feeding the chamber **11** is fed by nitrogen in the gaseous state.

The nitrogen in the gaseous state advantageously comes from a liquid nitrogen storage tank (not shown in the drawing) via the passage in an air heat exchanger (also not shown in the drawing), which will be suitably dimensioned according to the flow rates that need to be supplied.

Said first circuit **30a** for feeding nitrogen in the gaseous state to the mixing chamber **11** advantageously comprises at least the following elements
- a first on/off solenoid valve **7,** which can advantageously be operated via a PLC directly from the control panel of the user machine (welding machine);
- a ball valve **1;**
- a first safety valve **2** advantageously set at approximately 8 bar;
- a pressure reducer **3** advantageously DN 15 designed to reduce the pressure from the input value of approximately 6 bar to an output value of approximately 4 bar;
- a pressure gauge **4,** preferably in the range of 0-10 bar;
- a pressure transmitter **8;**
- a flow meter **5;**
- a needle valve **6** for regulation of the flow rate.

The flow of nitrogen in the gaseous state is activated manually via said control panel **30c** or directly and remotely via the activation command of the high-frequency welding machine to which the system is interlocked, advantageously by means of a PLC.

The pressure of the gaseous nitrogen flow is regulated to approx. 4 bar via a suitable pressure reducer **3.**

Between the solenoid valve **7** and the reducer **3** a ball valve **1** and a safety valve **2** for overpressure set at 8 bar are advantageously inserted.

The flow rate is preferably measured by means of a flowmeter **5,** optionally but not necessarily digital and connected to the control panel, with a scale of 0-30 Nm³/h, in that the maximum flow rate is advantageously 30 Nm³/h, with relative needle valve **6** for regulation of the flow rate.

A pressure gauge **4** for measurement of the pressure and a pressure transmitter **8** configured to transmit the value of the pressure measured by the pressure gauge **4** to the control panel **30c** complete the line **30a.**

The flow rate of gaseous nitrogen thus regulated, i.e. preferably to a pressure value of 4 bar and with a flow rate of approximately 15-20 Nm³/h, maximum 30 Nm³/h, is delivered into the mixing chamber **11.**

Similarly, the second circuit **30b** feeding nitrogen in the liquid state to the mixing chamber **11** advantageously comprises at least the following elements:
- a second on-off solenoid valve **9;**
- a second safety valve **2** advantageously set at 8 bar;
- a modulating pneumatic valve **10** for regulating the flow rate.

Also in this case, the flow of liquid nitrogen in the second circuit **30b** is activated manually from the control panel **30c** or remotely via the start command of the welding machine served via an on/off solenoid valve **9.**

Downstream of this on/off solenoid valve **9** a modulating pneumatic valve **10** is advantageously placed, capable of regulating the flow rate of liquid nitrogen in the second circuit **30b** as a function of the temperature value of the nitrogen read by the temperature probe **12** inside the mixing chamber **11.**

Advantageously, said temperature value of the nitrogen inside the mixing chamber **11** may vary within a range of +/- 10°C with respect to the required temperature value, which preferably may be about - 80°C. The nitrogen inside the mixing chamber **11** will therefore advantageously be in the gaseous state.

For the cooling of the impeder **20,** nitrogen in the gaseous state exiting the mixing chamber **11** is used.

In order to reach the required temperature value of the gaseous nitrogen and keep it constant within the mixing chamber **11,** the cooling system **30** of the apparatus **1** according to the present invention therefore mixes liquid nitrogen preferably at a temperature **T_{L}** between Tₘᵢₙ - 175°C and Tₘₐₓ - 160°C, at a pressure value of 6 bar and a variable flow rate, and gaseous nitrogen at a temperature **T_{G}** comprised between Tₘᵢₙ - 20°C and Tₘₐₓ + 40°C, at a pressure value of 4 bar and a flow rate preferably of 15/20 Nm³/h to advantageously deliver gaseous nitrogen at the following conditions Tₘₐₓ -70°C, Tₘᵢₙ - 90°C at a pressure of 4 bar.

Said mixing chamber **11** is supplied simultaneously by liquid nitrogen and gaseous nitrogen, and more particularly the gaseous nitrogen will be advantageously at the indicated pressure and flow rate values that are those required by the user machine, while the flow of liquid nitrogen into the mixing chamber is regulated by a modulating valve **10** as a function of the temperature **Tₑ** of the mixed nitrogen measured by means of the temperature probe **12** at the point of use.

The quantity of liquid nitrogen in the mixing chamber **11** is therefore regulated as a function of the temperature required at the point of use, measured by the temperature probe **12.**

The liquid nitrogen thus mixes in the chamber **11** provided with the gaseous nitrogen, creating the refrigerant gas at the optimum temperature for the functioning of the impeder **20.** The mixing chamber **11** is protected from the danger of overpressure thanks to the presence of a third safety valve **2.**

The nitrogen thus mixed is fed to the impeder **20** by means of suitable insulated piping **21.**

Having thus described the impeder apparatus **1** for high-frequency welding according to the present invention, we will now briefly describe the mode of functioning of this apparatus.

The apparatus according to the present invention can advantageously operate in manual or automated mode, with remote actuation.

As has been described, the apparatus **1** according to the present invention comprises a cooling system **30** in turn comprising said at least one mixing chamber **11** fed by the two circuits **30a, 30b,** and at least one control and command panel **30c.**

In automated mode with remote actuation, the command and control panel **30c** will send a command to open on-off valves for injection of liquid nitrogen **9** and, respectively, gaseous nitrogen 7, into the mixing chamber **11.**

When the on-off injection valves **7** and **9** are open, said modulating valve **10** will maintain the temperature of the mixture exiting the mixing chamber **11** at the set value of - 80°C with reverse control operation: as the output temperature **Tₑ** increases, the modulating valve **10** will increase its opening, causing more liquid nitrogen to flow to the chamber **11,** while as the temperature decreases the modulating valve **10** will gradually close causing less liquid nitrogen to flow to the mixing chamber **11.**

When the set temperature **Tₑ** is reached and maintained within the required and programmable limits, the apparatus will send a system ready signal to the user machine.

The apparatus will maintain the regulation of the cooling system **30** of the impeder **20** until it receives the switch-off signal from the user machine. The user machine, i.e. the high-frequency induction welding machine, is in fact provided with a control panel from which the cooling apparatus **30** according to the present invention can also be operated preferably via PLC. It is therefore not necessary to operate on the cooling system **30** directly, but all commands can be managed from the control panel, for example equipped with a touch screen, of the high-frequency induction welding machine with which said cooling system **30** is associated.

In the event of an emergency or fault being detected, an emergency command will interrupt the supply by means of closure of the liquid nitrogen and gaseous nitrogen supply valves.

In manual operation mode (selector switch in MAN) the start-up procedure will begin as soon as the operator intervenes on the control panel **30c** by positioning the appropriate selector switch in the start position (selector switch in position 1). This operation will completely bypass the consent from the user machine, and it will be possible to dispense nitrogen without waiting for the solenoid valves opening consent from the user machine.

The modes of operation are similar to that described above.

The system will maintain the regulation operation until intervention by the operator, who must return the selector switch to position 0 to stop operation.

A welding process is also an object of the present invention, comprising at least the steps of:
- providing an impeder apparatus for high-frequency welding, comprising at least one cooling system **30** for the cooling of at least one impeder **20;** said cooling system **30** comprising in turn at least one mixing chamber **11** fed by two separate circuits **30a, 30b,** and at least one command and control panel **30c;**
- feeding said mixing chamber **11** with nitrogen in the gaseous state via a first circuit **30a** of said two separate circuits **30a, 30b** for feeding the chamber **11;**
- feeding said mixing chamber **11** with nitrogen in the liquid state via a second circuit **30b** of said two separate circuits **30a, 30b** for feeding said chamber **11;**
- feeding the cooling circuit of said at least one impeder **20** with the mixture contained in said mixing chamber **11.**

The welding process according to the present invention also advantageously comprises the steps of:
- regulating the quantity of liquid nitrogen that flows to the mixing chamber **11** as a function of temperature **Tₑ** that is required at the point of use, i.e. at the outlet from the mixing chamber **11,** measured by the temperature probe **12** placed at the outlet of the mixing chamber **11.**

Providing in particular the steps of
- regulating the quantity of liquid nitrogen that flows to the mixing chamber **11** by means of a modulating valve **10** implemented via said control and command panel **30c** according to the temperature value **Tₑ** measured by the temperature probe **12** positioned at the outlet of the mixing chamber **11;**

In particular:
- increasing the flow rate of liquid nitrogen flowing to the mixing chamber **11** as the output temperature **Tₑ** measured by the temperature probe **12** increases;
- decreasing the flow rate of liquid nitrogen flowing to the mixing chamber **11** as the output temperature **Tₑ** measured by the temperature probe **12** decreases.

It has thus been shown how the impeder apparatus **1** for high-frequency welding according to the present invention and the welding method implemented by means of said apparatus achieve the intended task and objects.

More particularly, it has been shown how said welding apparatus and said method ensure the control of a required and constant temperature on the impeder, without the need to provide systems for water recirculation and/or collection of refrigerant liquids, nor the disposal thereof.

Furthermore, the apparatus and method according to the present invention enable programming of the temperature of the refrigerant mixture that feeds the cooling circuit of the impeder by means of an electronic control (PLC); moreover, the apparatus and method according to the present invention enable real-time monitoring of the temperature on the impeder.

Last but not least, it has been shown how the apparatus and method according to the present invention enable minimisation of oxidative effects and possible welding cracks in that nitrogen also performs an inerting function and replaces oxygen (avoiding oxidation) and water vapour (avoiding cracks due to H₂), furthermore, no particular geometries of the impeder are required and no modification of the user machine is necessary.

The impeder apparatus for high-frequency welding according to the present invention and the welding method implemented by means of said apparatus may also undergo modifications and variations, all of which fall within the scope of the invention as defined by the appended claims.

## Claims

1. Welding apparatus comprising an impeder welding machine (20) for high-frequency welding, particularly for welding pipes, and a cooling system (30) of said welding machine in turn comprising at least one mixing chamber (11) and at least two separate supply circuits (30a, 30b) suitable for feeding said mixing chamber (11), in which a first (30a) of said supply circuits feeds gaseous nitrogen to the mixing chamber (11), and a second (30b) of said supply circuits feeds nitrogen in the liquid state to said mixing chamber (11), said mixing chamber (11) being in connection with said impeder (20), **characterized in that** said cooling system (30) further comprises at least one storage tank containing liquid nitrogen, at least one heat exchanger, preferably an air heat exchanger, and at least one control panel (30c) suitable for controlling said welding apparatus and said cooling system (30).

2. Welding apparatus (1) according to the preceding claim, **characterised in that** said first supply circuit (30a) further comprising at least the following elements:
- a first on/off solenoid valve (7);
- a ball valve (1);
- at least one first safety valve (2), preferably set at about 8 bar;
- at least one pressure reducer (3) suitable for reducing the pressure from the input value of approximately 6 bar to an output value of approximately 4 bar;
- at least one pressure gauge (4) for measuring pressure;
- at least one pressure transmitter (8) for transmitting the pressure value measured by the pressure gauge (4) to the control panel (30c);
- at least one flowmeter (5) preferably comprising at least one needle valve (6) for regulating the flow rate.

3. Welding apparatus (1) according to one of the preceding claims, **characterised in that** said second (30b) supply circuit further comprises at least the following elements:
- a second on-off solenoid valve (9);
- a second safety valve (2) advantageously set at 8 bar;
- a modulating valve (10) for regulating the flow rate of liquid nitrogen in said second supply circuit (30b) as a function of the temperature value of the nitrogen read by the temperature probe (12) placed at the outlet of the mixing chamber (11).

4. Welding apparatus (1) according to one of the preceding claims, **characterised in that** said first (7) and second (9) on/off solenoid valves are activated manually from the control panel (30c) or remotely via the start command of the welding machine.

5. Welding apparatus (1) according to one of the preceding claims, **characterised in that** said cooling system (30) mixes liquid nitrogen preferably at a temperature (T_{L}) comprised between - 175°C and - 160°C, at a pressure value of 6 bar and with a variable flow rate and gaseous nitrogen at a temperature (T_{G}) between - 20°C and + 40°C, at a pressure value of 4 bar and flow rate preferably of 15/20 Nm³/h, to deliver at the outlet from said mixing chamber (11) gaseous nitrogen at a temperature comprised between - 70°C and - 90°C, preferably equal to - 80°C, at a pressure of 4 bar.

6. Welding apparatus (1) according to one of the preceding claims, **characterised in that** said cooling system (30) further comprises at least one temperature probe (12) suitable for measuring the temperature (Tₑ) of the nitrogen mixed inside said mixing chamber (11), and **in that** said mixing chamber (11) is simultaneously fed with liquid nitrogen and gaseous nitrogen, said gaseous nitrogen being advantageously at the pressure and flow rate required by the user machine, and wherein the flow of said liquid nitrogen to the mixing chamber (11) is regulated by said modulating valve (10) as a function of the temperature (Tₑ) of the mixed nitrogen measured by said temperature probe (12) at the point of use, i.e. at the outlet of said mixing chamber (11).

7. Welding apparatus (1) according to one of the preceding claims, **characterised in that** the temperature value of the nitrogen inside the mixing chamber (11) is comprised between - 90°C and - 70°C, preferably equal to - 80°C, so that the nitrogen inside said mixing chamber (11) is advantageously maintained in the gaseous state, so as to be conveyed in this gaseous state to said impeder (20) through a pipe (21), preferably an insulated pipe.

8. High-frequency welding process, particularly for welding pipes, by means of an apparatus comprising an impeder welding machine (20) and a cooling system (30) of said welding machine, comprising at least the steps of:
- providing a cooling system (30) of said impeder welding machine in which a mixing chamber (11) is fed by two separate supply circuits (30a, 30b), and in which at least one command and control panel (30c) controls said separate supply circuits (30a, 30b) by means of first (7) and second (9) on-off solenoid valves;
- feeding said mixing chamber (11) with nitrogen in the gaseous state via said first circuit (30a) of said two separate supply circuits of the mixing chamber (11);
- feeding said mixing chamber (11) with nitrogen in the liquid state via a second circuit (30b) of said two separate circuits for supplying the mixing chamber (11);
- feeding the cooling circuit of said at least one impeder (20) of said welding machine with the mixture in the gaseous state exiting said mixing chamber (11).

9. Welding process according to the preceding claim, **characterised in that** it further comprises the step of:
- regulating the quantity of liquid nitrogen that flows to the mixing chamber (11) via said second supply circuit (30b) as a function of the temperature (Tₑ) measured by a temperature probe (12) placed at the outlet of said mixing chamber (11).

10. Welding process according to the preceding claim, **characterised in that** it further comprises the step of:
- regulating the quantity of liquid nitrogen that flows to the mixing chamber (11) via said second supply circuit (30b) by means of a modulating valve (10) actuated as a function of the temperature value (Tₑ) measured by said temperature probe (12) placed at the outlet of the mixing chamber (11).

11. Welding process according to any preceding claim, **characterised in that** it further comprises the step of:
- increasing the flow rate of liquid nitrogen flowing to the mixing chamber (11) as the output temperature (Tₑ) measured by the temperature probe (12) increases;
- decreasing the flow rate of liquid nitrogen flowing to the mixing chamber (11) as the output temperature (Tₑ) measured by the temperature probe (12) decreases.

## Patentansprüche

1. Schweißvorrichtung umfassend eine Impeder-Schweißmaschine (20) zum Hochfrequenzschweißen, insbesondere zum Schweißen von Rohren, und ein Kühlsystem (30) der Schweißmaschine, das seinerseits mindestens eine Mischkammer (11) und mindestens zwei getrennte Versorgungsschaltungen (30a, 30b) umfasst, die zum Einspeisen der Mischkammer (11) geeignet sind, wobei eine erste (30a) der Versorgungsschaltungen der Mischkammer (11) gasförmigen Stickstoff einspeist, und eine zweite (30b) der Versorgungsschaltungen Stickstoff in flüssigem Zustand in die Mischkammer (11) einspeist, wobei die Mischkammer (11) mit dem Impeder (20) in Verbindung steht, **dadurch gekennzeichnet, dass** das Kühlsystem (30) ferner mindestens einen Speicherbehälter, der flüssigen Stickstoff enthält, mindestens einen Wärmetauscher, vorzugsweise einen Luftwärmetauscher, und mindestens eine Steuertafel (30c) umfasst, die zur Steuerung der Schweißvorrichtung und des Kühlsystems (30) geeignet ist.

2. Schweißvorrichtung (1) nach dem vorhergehenden Anspruch, **dadurch gekennzeichnet, dass** die erste Versorgungsschaltung (30a) ferner mindestens die folgenden Elemente umfasst:
- ein erstes Ein/Aus-Magnetventil (7);
- einen Kugelhahn (1);
- mindestens ein erstes Sicherheitsventil (2), das vorzugsweise auf etwa 8 bar eingestellt wird;
- mindestens einen Druckminderer (3), der geeignet ist, den Druck von einem Eingabewert von etwa 6 bar auf einen Ausgabewert von etwa 4 bar zu reduzieren;
- mindestens ein Manometer (4) zum Messen des Druckes;
- mindestens einen Druckgeber (8) zum Übertragen des Druckwertes, der von dem Manometer (4) gemessen wird an die Steuertafel (30c);
- mindestens einen Durchflussmesser (5), der vorzugsweise mindestens ein Nadelventil (6) zum Einstellen der Durchflussmenge umfasst.

3. Schweißvorrichtung (1) nach einem der vorhergehenden Ansprüche, **dadurch gekennzeichnet, dass** die zweite Versorgungsschaltung (30b) ferner mindestens die folgenden Elemente umfasst:
- ein zweites Ein-Aus-Magnetventil (9);
- ein zweites Sicherheitsventil (2), das vorzugsweise auf 8 bar eingestellt wird;
- ein Modulationsventil (10) zum Einstellen der Durchflussmenge des flüssigen Stickstoffs in der zweiten Versorgungsschaltung (30b) in Abhängigkeit von dem Temperaturwert des Stickstoffs, der von der Temperatursonde (12), die an dem Ausgang der Mischkammer (11) angeordnet ist, abgelesen wird.

4. Schweißvorrichtung (1) nach einem der vorhergehenden Ansprüche, **dadurch gekennzeichnet, dass** das erste (7) und das zweite (9) Ein/Aus-Magnetventil manuell von der Steuertafel (30c) oder fern über den Startbefehl der Schweißmaschine aktiviert werden.

5. Schweißvorrichtung (1) nach einem der vorhergehenden Ansprüche, **dadurch gekennzeichnet, dass** das Kühlsystem (30) flüssigen Stickstoff bei einer Temperatur (T_{L}) zwischen - 175°C und - 160°C, bei einem Druckwert von 6 bar und mit einer variablen Durchflussmenge und gasförmigen Stickstoff bei einer Temperatur (T_{G}) zwischen - 20°C und + 40°C, bei einem Druckwert von 4 bar und einer Durchflussmenge von vorzugsweise 15/20 Nm³/h mischt, um am Ausgang aus der Mischkammer (11) gasförmigen Stickstoff mit einer Temperatur zwischen - 70°C und - 90°C, vorzugsweise gleich - 80°C, bei einem Druck von 4 bar abzugeben.

6. Schweißvorrichtung (1) nach einem der vorhergehenden Ansprüche, **dadurch gekennzeichnet, dass** das Kühlsystem (30) ferner mindestens eine Temperatursonde (12) umfasst, die zum Messen der Temperatur (Tₑ) des in der Mischkammer (11) gemischten Stickstoffs geeignet ist, und dass die Mischkammer (11) gleichzeitig mit flüssigem und gasförmigem Stickstoff eingespeist wird, wobei der gasförmige Stickstoff vorteilhaft den Druck und die Durchflussmenge aufweist, die von der Benutzermaschine benötigt werden, und wobei der Durchfluss des flüssigen Stickstoffs in die Mischkammer (11) durch das Modulationsventil (10) in Abhängigkeit von der Temperatur (Tₑ) des gemischten Stickstoffs eingestellt wird, die von der Temperatursonde (12) an dem Verwendungspunkt, d. h. an dem Ausgang der Mischkammer (11), gemessen wird.

7. Schweißvorrichtung (1) nach einem der vorhergehenden Ansprüche, **dadurch gekennzeichnet, dass** der Temperaturwert des Stickstoffs innen der Mischkammer (11) zwischen - 90°C und - 70°C, vorzugsweise gleich - 80°C, liegt, sodass der Stickstoff innen der Mischkammer (11) vorteilhaft in dem gasförmigem Zustand gehalten wird, um in diesem gasförmigen Zustand durch eine Leitung (21), vorzugsweise eine isolierte Leitung, zu dem Impeder (20) befördert zu werden.

8. Hochfrequenzschweißverfahren, insbesondere zum Schweißen von Rohren, mittels einer Vorrichtung umfassend eine Impeder-Schweißmaschine (20) und ein Kühlsystem (30) der Schweißmaschine, umfassend mindestens den folgenden Schritten:
- Bereitstellen eines Kühlsystems (30) der Impeder-Schweißmaschine, in dem eine Mischkammer (11) durch zwei getrennte Versorgungsschaltungen (30a, 30b) eingespeist wird, und in dem mindestens ein Befehls- und Steuertafel(30c) die getrennten Versorgungsschaltungen (30a, 30b) mittels eines ersten (7) und eines zweiten (9) Ein-Aus-Magnetventils steuert;
- Einspeisen der Mischkammer (11) mit Stickstoff in gasförmigem Zustand über die erste Schaltung (30a) der zwei getrennten Versorgungsschaltungen der Mischkammer (11);
- Einspeisen der Mischkammer (11) mit Stickstoff in dem flüssigem Zustand über eine zweite Schaltung (30b) der zwei getrennten Schaltungen zum Versorgen der Mischkammer (11);
- Einspeisen der Kühlschaltung des mindestens einen Impeders (20) der Schweißmaschine mit der Mischung in dem gasförmigen Zustand, die aus der Mischkammer (11) austritt.

9. Schweißverfahren nach dem vorhergehenden Anspruch, **dadurch gekennzeichnet, dass** es ferner den folgenden Schritt umfasst:
- Einstellen der Menge des flüssigen Stickstoffs, die über die zweite Versorgungsschaltung (30b) in die Mischkammer (11) fließt, in Abhängigkeit von der Temperatur (Tₑ), die von einer Temperatursonde (12) gemessen wird, die an dem Ausgang der Mischkammer (11) angeordnet ist.

10. Schweißverfahren nach dem vorhergehenden Anspruch, **dadurch gekennzeichnet, dass** es ferner den folgenden Schritt umfasst:
- Einstellen der Menge des flüssigen Stickstoffs, die über die zweite Versorgungsschaltung (30b) in die Mischkammer (11) fließt, mittels eines Modulationsventils (10), das in Abhängigkeit von dem Temperaturwert (Tₑ) betätigt wird, der von der Temperatursonde (12) gemessen wird, die an dem Ausgang der Mischkammer (11) angeordnet ist.

11. Schweißverfahren nach einem der vorhergehenden Ansprüche, **dadurch gekennzeichnet, dass** es ferner den folgenden Schritt umfasst:
- Erhöhen der Durchflussmenge des flüssigem Stickstoffs, der in die Mischkammer (11) fließt, wenn die von der Temperatursonde (12) gemessene Ausgangstemperatur (Tₑ) erhöht;
- Verringern der Durchflussmenge des flüssigem Stickstoffs, der in die Mischkammer (11) fließt, wenn die von der Temperatursonde (12) gemessene Ausgangstemperatur (Tₑ) verringert.

## Revendications

1. Appareil de soudage comprenant une machine à souder à concentrateur de champ (20) pour le soudage à haute fréquence, en particulier pour le soudage de tuyaux, et un système de refroidissement (30) de ladite machine à souder comprenant à son tour au moins une chambre de mélange (11) et au moins deux circuits d'approvisionnement séparés (30a, 30b) appropriés pour alimenter ladite chambre de mélange (11), dans lequel un premier (30a) desdits circuits d'approvisionnement alimente la chambre de mélange (11) avec de l'azote à l'état gazeux, et un deuxième (30b) desdits circuits d'approvisionnement alimente en azote à l'état liquide ladite chambre de mélange (11), ladite chambre de mélange (11) étant en liaison avec ledit concentrateur de champ (20), **caractérisé en ce que** ledit système de refroidissement (30) comprend en outre au moins un réservoir de stockage contenant de l'azote liquide, au moins un échangeur de chaleur, de préférence un échangeur de chaleur à air, et au moins un panneau de commande (30c) approprié pour commander ledit appareil de soudage et ledit système de refroidissement (30).

2. Appareil de soudage (1) selon la revendication précédente, **caractérisé en ce que** ledit premier circuit d'approvisionnement (30a) comprend en outre au moins les éléments suivants :
- une première électrovanne marche/arrêt (7) ;
- un robinet à boisseau sphérique (1) ;
- au moins une première vanne de sécurité (2), de préférence réglée à environ 8 bars ;
- au moins un réducteur de pression (3) approprié pour réduire la pression de la valeur d'entrée d'environ 6 bars à une valeur de sortie d'environ 4 bars ;
- au moins un manomètre (4) pour mesurer la pression ;
- au moins un transmetteur de pression (8) pour transmettre la valeur de la pression mesurée par le manomètre (4) au panneau de commande (30c) ;
- au moins un débitmètre (5) comprenant de préférence au moins une vanne à pointeau (6) pour réguler le débit.

3. Appareil de soudage (1) selon l'une des revendications précédentes, **caractérisé en ce que** ledit deuxième circuit d'approvisionnement (30b) comprend en outre au moins les éléments suivants :
- une deuxième électrovanne marche/arrêt (9) ;
- une deuxième vanne de sécurité (2) avantageusement réglée à 8 bars ;
- une vanne modulante (10) pour réguler le débit d'azote liquide dans ledit deuxième circuit d'approvisionnement (30b) en fonction de la valeur de température de l'azote lue par la sonde de température (12) placée à la sortie de la chambre de mélange (11).

4. Appareil de soudage (1) selon l'une des revendications précédentes, **caractérisé en ce que** lesdites première (7) et deuxième (9) électrovannes marche/arrêt sont activées manuellement à partir du panneau de commande (30c) ou à distance via la commande de démarrage de la machine de soudage.

5. Appareil de soudage (1) selon l'une des revendications précédentes, **caractérisé en ce que** ledit système de refroidissement (30) mélange de l'azote liquide de préférence à une température (T_{L}) comprise entre - 175 °C et - 160 °C, à une valeur de pression de 6 bars et à un débit variable et de l'azote gazeux à une température (T_{G}) comprise entre - 20 °C et + 40 °C, à une valeur de pression de 4 bars et à un débit de préférence de 15/20 Nm³/h, pour délivrer à la sortie de ladite chambre de mélange (11) de l'azote gazeux à une température comprise entre - 70 °C et - 90 °C, de préférence égale à - 80 °C, à une pression de 4 bars.

6. Appareil de soudage (1) selon l'une des revendications précédentes, **caractérisé en ce que** ledit système de refroidissement (30) comprend en outre au moins une sonde de température (12) appropriée pour mesurer la température (Tₑ) de l'azote mélangé à l'intérieur de ladite chambre de mélange (11), et **en ce que** ladite chambre de mélange (11) est alimentée simultanément avec de l'azote liquide et de l'azote gazeux, ledit azote gazeux étant avantageusement à la pression et au débit requis par la machine utilisatrice, et dans lequel le débit dudit azote liquide dans la chambre de mélange (11) est régulé par ladite vanne modulante (10) en fonction de la température (Tₑ) de l'azote mélangé mesurée par ladite sonde de température (12) au point d'utilisation, c'est-à-dire à la sortie de ladite chambre de mélange (11).

7. Appareil de soudage (1) selon l'une des revendications précédentes, **caractérisé en ce que** la valeur de la température de l'azote à l'intérieur de la chambre de mélange (11) est comprise entre - 90 °C et - 70 °C, de préférence égale à - 80 °C, de sorte que l'azote à l'intérieur de ladite chambre de mélange (11) est avantageusement maintenu à l'état gazeux, afin d'être acheminé dans cet état gazeux vers ledit concentrateur de champ (20) par l'intermédiaire d'un tuyau (21), de préférence d'un tuyau isolé.

8. Procédé de soudage à haute fréquence, notamment pour le soudage de tuyaux, au moyen d'un appareil comprenant une machine à souder à impédance (20) et un système de refroidissement (30) de ladite machine à souder, comprenant au moins les étapes suivantes :
- fournir un système de refroidissement (30) de ladite machine à souder à impulsions dans lequel une chambre de mélange (11) est alimentée par deux circuits d'approvisionnement séparés (30a, 30b), et dans lequel au moins un panneau de commande et de contrôle (30c) commande lesdits circuits d'approvisionnement séparés (30a, 30b) au moyen d'une première (7) et d'une deuxième (9) électrovannes marche-arrêt ;
- alimenter ladite chambre de mélange (11) en azote à l'état gazeux via ledit premier circuit (30a) des deux circuits d'approvisionnement distincts de la chambre de mélange (11) ;
- alimenter ladite chambre de mélange (11) en azote à l'état liquide par l'intermédiaire d'un deuxième circuit (30b) de ces deux circuits distincts d'approvisionnement de la chambre de mélange (11) ;
- alimenter le circuit de refroidissement dudit au moins un concentrateur de champ (20) de ladite machine à souder avec le mélange à l'état gazeux sortant de ladite chambre de mélange (11).

9. Procédé de soudage selon la revendication précédente, **caractérisé par le fait qu'**il comprend en outre l'étape suivante :
- réguler la quantité d'azote liquide qui s'écoule vers la chambre de mélange (11) via ledit deuxième circuit d'approvisionnement (30b) en fonction de la température (Tₑ) mesurée par une sonde de température (12) placée à la sortie de ladite chambre de mélange (11).

10. Procédé de soudage selon la revendication précédente, **caractérisé par le fait qu'**il comprend en outre l'étape suivante :
- réguler la quantité d'azote liquide qui s'écoule vers la chambre de mélange (11) via ledit deuxième circuit d'approvisionnement (30b) au moyen d'une vanne modulante (10) actionnée en fonction de la valeur de température (Tₑ) mesurée par ladite sonde de température (12) placée à la sortie de la chambre de mélange (11).

11. Procédé de soudage selon toute revendication précédente, **caractérisé par le fait qu'**il comprend en outre l'étape suivante :
- augmenter le débit d'azote liquide dans la chambre de mélange (11) à mesure que la température de sortie (Tₑ) mesurée par la sonde de température (12) augmente ;
- diminuer le débit d'azote liquide s'écoulant dans la chambre de mélange (11) à mesure que la température de sortie (Tₑ) mesurée par la sonde de température (12) diminue.
